# EUROPEAN PATENT APPLICATION

(11) **EP 4 607 199 A1**
(43) Date of publication of application: **27.08.2025**
(21) Application number: 23879452.3
(22) Date of filing: 23.08.2023
(51) Int. Cl.: G01N 35/00, G08B 25/00

(54) **AUTOMATIC ANALYSIS SYSTEM, AND METHOD**

(30) Priority: 17.10.2022 JP 2022166049
(71) Applicant: HITACHI HIGH-TECH CORPORATION, Tokyo 105-6409 (JP)
(72) Inventor: NITTA, Hiroaki, Tokyo 105-6409 (JP); KAWAME, Kohei, Tokyo 105-6409 (JP); HAGIWARA, Takaaki, Tokyo 105-6409 (JP)
(74) Representative: MERH-IP Matias Erny Reichl Hoffmann Patentanwälte PartG mbB
(86) International application number: PCT/JP2023/030377
(87) International publication number: WO 2024/084799

(57) **Abstract**

In order to provide an automatic analysis system with which it is possible to select an alarm notification at a prescribed time and select notification content for each user, the present invention has: an automatic analysis device for analyzing a patient sample; a storage unit for storing data pertaining to consumables of the automatic analysis device; a control unit for performing alarm control of the automatic analysis device and controlling data input/output processes into/from the storage unit; a display unit that issues a notification of an alarm upon receiving processing from the control unit; and an alarm setting unit that is capable of setting, for each user, an alarm notification timing.

## Description

### Technical Field

The present invention relates to an automatic analysis system including an automatic analysis device, and a method.

### Background Art

The automatic analysis system includes an analysis device that automatically analyzes components contained in specimens such as blood and urine. When automatically analyzing the specimens, the automatic analysis system will notify a device user of occurrence of an alarm whenever maintenance of the analysis device, reagent replacement, operational errors, and the like occur.

In recent years, the number of clinical laboratory technicians who are device users decreases and the number of measurement specimens increases, whereby it is difficult for device users to obtain a certain length of free time due to dealing with irregular alarms generated by one or a plurality of devices. Therefore, a problem of becoming unable to focus on other works has occurs.

PTL 1 discloses an automatic analysis device that detects device abnormality based on information on a device status and a predetermined criterion and is provided with an alarm that notifies a user when abnormality occurs and an alarm that notifies the user when the device status becomes addressable, thereby preventing decrease in inspection efficiency and delay in reporting an inspection result by issuing planned alarms.

### Citation List

### Patent Literature

PTL 1: JP6742396B

### Summary of Invention

### Technical Problem

However, PTL 1 provides a system in which a timing of notification of the alarm is performed at a timing associated with an operation of the device (when measurement is completed or when standby state transition occurs), whereby it is difficult for the user to set a timing to receive the notification. Since the user has authority for each facility operation and items that can be implemented are different, alarm handling methods are also different. Therefore, there is a problem that settings of a notification content and timing of the alarm cannot be changed for each user.

Accordingly, an object of the present invention is to provide an automatic analysis system and method that can solve the problem of the related arts described above and notify an alarm at a predetermined time for each user.

### Solution to Problem

To solve the above problem, the present invention provides an automatic analysis system including an automatic analysis device that analyzes a patient specimen, a storage unit that stores consumable data of the automatic analysis device, a control unit that controls alarm control of the automatic analysis device and data input and output processes to and from the storage unit, a display unit that notifies an alarm upon receiving processing from the control unit, and an alarm setting unit capable of setting a notification timing of the alarm of the display unit for each user.

To solve the above problem, the present invention provides an automatic analysis method of an automatic analysis device that analyzes a patient specimen, in which the automatic analysis device stores data of consumables of the automatic analysis device, controls alarm control and the storage of the automatic analysis device, and is capable of notifying an alarm by the control while setting a notification timing of the alarm for each user.

### Advantageous Effects of Invention

According to the present invention, it is possible to change a timing of receiving notification for each user, which makes it possible to secure user work time suitable for facility operation and improve work efficiency.

### Brief Description of Drawings

[FIG. 1] FIG. 1 is a diagram showing an overall configuration of an automatic analysis device according to an embodiment of the present invention.
[FIG. 2] FIG. 2 is a diagram showing an alarm notification timing setting screen.
[FIG. 3] FIG. 3 is a diagram showing a management unit of consumables such as reagents and detergents.
[FIG. 4] FIG. 4 is a flowchart for calculating an average hourly usage amount of consumables such as reagents and detergents and a flowchart for calculating a historical maximum usage amount of consumables such as reagents and detergents.
[FIG. 5] FIG. 5 is a diagram showing a flowchart showing contents of an alarm notification process from a predicted consumption amount of consumables such as reagents and detergents.

### Description of Embodiments

Embodiments of the present invention will be described in detail based on the drawings. It is needless to say that in the following embodiments, components (including element steps, and the like) are not necessarily essential except when specifically stated and when clearly considered essential in principle.

### First Embodiment

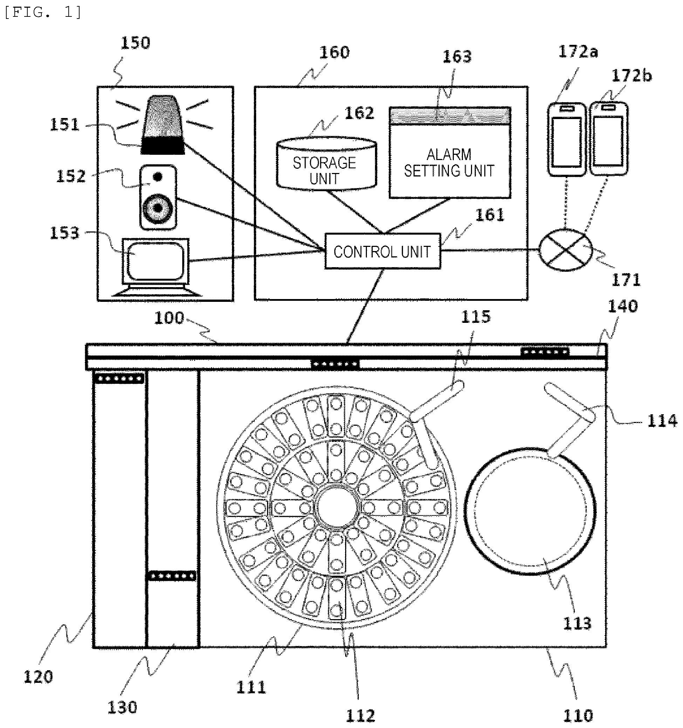

FIG. 1 is a diagram schematically showing an overall configuration of an automatic analysis device according to the present embodiment. In FIG. 1, an automatic analysis device 100 is schematically configured by a specimen input unit 120, an analysis unit 110, a specimen storage unit 130, a transport line 140, a notification unit 150, an operation unit PC 160, remote operation terminals 172a and 172b, and the like.

The specimen input unit 120 and the specimen storage unit 130 are connected by the transport line 140, and the analysis unit 110 is arranged along the transport line.

A specimen container containing a specimen to be analyzed is input to the specimen input unit 120, and is transported to the analysis unit 110 or the specimen storage unit 130 via the transport line 140. The specimen is identified by identification information such as a barcode or an RFID attached to the specimen container. The identification information is read by a reading device (not shown) and transmitted to the operation unit PC 160.

The analysis unit 110 is configured by a reagent disk 113, a probe A 114 that dispenses the specimen contained in the specimen container transported by the transport line 140 into a reaction vessel, a reagent disk 111 mounted with a plurality of reagent bottles 112 that contain reagents used for analysis of the specimen, and a probe B 115 that dispenses the reagent of the reagent bottle 112 into the reaction vessel. The analysis unit 110 measures absorbance, scattered light intensity, and the like of the mixed solution of the specimen and the reagent (reaction solution) contained in the reaction vessel.

The notification unit 150 is configured by a light emitting device 151, a sound generating device 152, and a display device 153.

The issuing device 151, the sound generating device 152, and the display device 153 are connected to the control unit 161, and a state is changed under specific conditions (The issuing device 151 issues a designated color, the sound generating device 152 makes a specific sound, and the display device 153 changes a display content).

The operation unit PC 160 is configured by a control unit 161, a storage unit 162, and an alarm setting unit 163. The operation unit PC 160 communicates with the specimen input unit 120, the analysis unit 110, the specimen storage unit 130, and the transport line 140 of the automatic analysis device 100. A radio device 171 is connected, and is communicably and wirelessly connected to one or a plurality of (two in the present embodiment) remote operation terminals 172a and 172b by wireless communication.

The alarm setting unit 163 sets a notification timing of an alarm for each user based on settings made by an alarm notification timing setting screen 200 described later.

The storage unit 162 stores setting information related to alarm notification (information such as user authority selection, notification time interval, and notification time) set for each user by the alarm setting unit 163.

The control unit 161 notifies the notification unit 150 and the radio 171 of the information at the alarm notification timing set by the alarm setting unit 163. Upon receiving information, the light emitting device 151 issues a specific color, the sound generating device 152 makes a specific sound, and the display device 153 performs a specific display change. The remote operation terminals 172a and 172b receive information from the radio 171 and perform specific display changes.

As such, the alarm is notified at a time interval or a time set for each user. Thus, work efficiency of the user can be improved by eliminating a need to work by alarms at any time as in the related art.

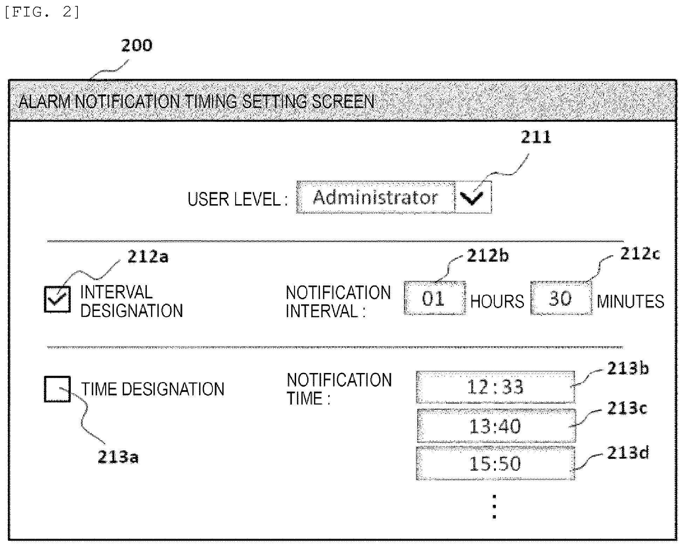

FIG. 2 is a diagram of an alarm notification timing setting screen.

The alarm notification timing setting screen 200 shown in FIG. 2 is displayed in the display device 153, and registers a user level, a time interval for notifying an alarm, and a notification time for each user.

In FIG. 2, the alarm notification timing setting screen includes user authority selection 211, interval designation 212, notification intervals 213a and 213b, time designation 215, notification times 216a, 216b, and 216c, and the like.

The user authority selection 211 is for selecting a user level. The user authority selection 211 is a setting for controlling an alarm to be notified based on a user level.

The interval designations 212a, 212b, and 212c are for setting time intervals of notifying an alarm. The alarm is notified at designated time intervals.

The time designations 213a, 213b, and 213c are for setting time of notifying an alarm. The alarm is notified at designated time.

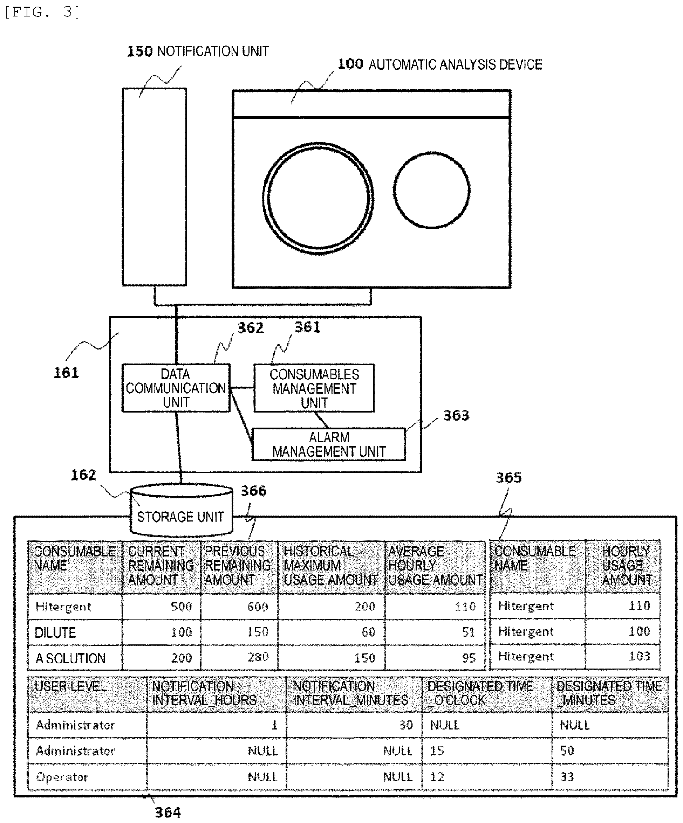

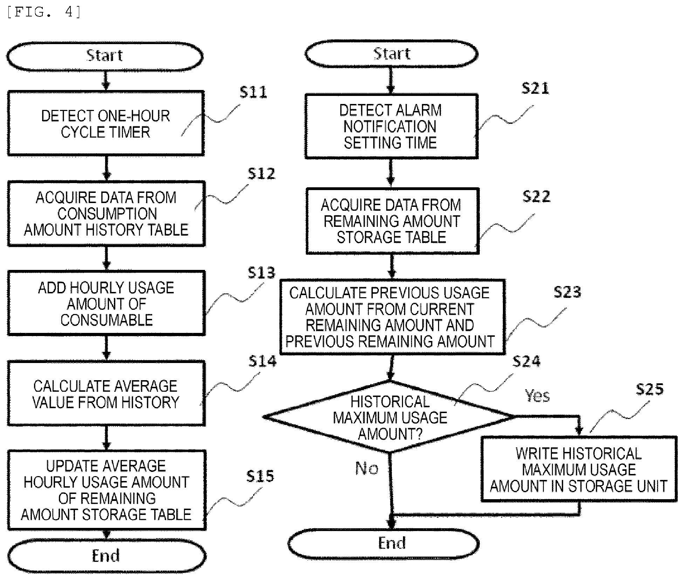

Hereinafter, processing operations of the automatic analysis device of the present embodiment will be described using FIGS. 3 and 4.

FIG. 3 is a diagram showing a management unit of consumables such as reagents and detergents.

The storage unit 162 stores an alarm setting storage table 364, a consumption amount history table 365, a remaining amount storage table 366, and the like.

The alarm setting storage table 364 stores alarm notification timing for each user. The consumption amount history table 365 stores a usage amount of consumables such as reagents and detergents per predetermined time. The predetermined time may be any time such as, for example, 30 minutes or 2 hours. In the present embodiment, an example when the predetermined time is 1 hour will be described.

The remaining amount storage table 366 stores a current remaining amount, a remaining amount at the time of a previous alarm notification, a historical maximum usage amount, and an average hourly usage amount of consumables such as reagents and detergents.

The control unit 161 includes a consumables management unit 361, a data communication unit 362, an alarm management unit 363, and the like.

The consumables management unit 361 acquires information on consumables such as reagents and detergents from the storage unit 162 via the data communication unit 363, and manages prediction of a consumption amount of consumables such as reagents and detergents until the next alarm notification timing based on the set alarm notification timing.

The data communication unit 362 is connected to the automatic analysis device 100, the notification unit 150, the storage unit 162, and the consumables management unit 361. The automatic analysis device 100 notifies the remaining amount and the usage amount of consumables such as reagents and detergents, and notifies the storage unit 162 of the information such as the remaining amount and the usage amount. The storage unit 162 acquires alarm notification setting information for each user and information on consumables such as reagents and detergents, and also notifies the consumables management unit 361 of the information. Alarm information is notified to the alarm management unit 363 at the alarm notification timing.

FIG. 4 is a flowchart for calculating the average hourly usage amount of consumables such as reagents and detergents and a flowchart for calculating the historical maximum usage amount of consumables such as reagents and detergents.

In FIG. 4, the consumables management unit 361 detects one-hour cycle timer detection (step, hereinafter abbreviated as S) 11 and acquires a usage amount of consumables for one hour from the consumption amount history table data of the storage unit 162 via the data communication unit 362 (S12), adds the acquired usage amount to the consumables usage amount stored by the consumables management unit 361 (S13), and calculates an average value from the past consumables usage amount (S14). The average hourly usage amount is updated on the remaining amount storage table of the storage unit 162 via the data communication unit 362 (S15).

The consumables management unit 361 detects the alarm notification setting time (S21), acquires data from the remaining amount storage table 366 of the storage unit 162 via the data communication unit 362 (S22), and calculates the previous usage amount from the current remaining amount and the previous remaining amount of consumables such as reagents and detergents (S23). When the calculated previous usage amount is the historical maximum usage amount (Yes in S24), the historical maximum usage amount in the remaining amount storage table 366 of the storage unit 162 is updated via the data communication unit 362 (S25).

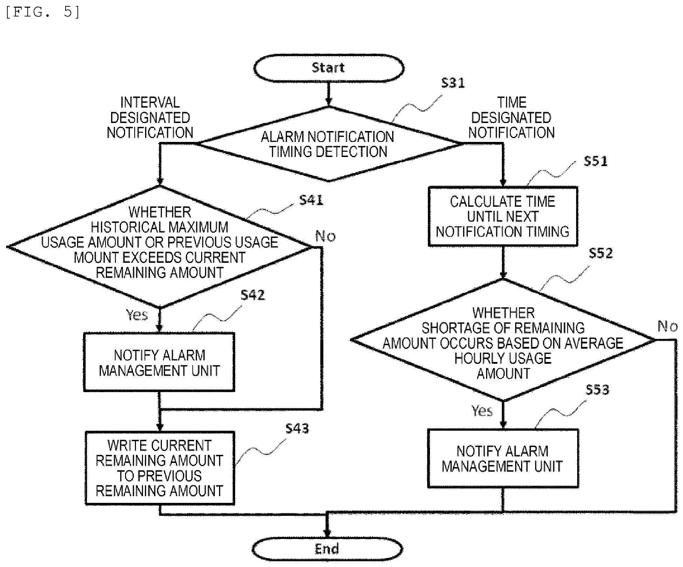

FIG. 5 is a flowchart showing contents of an alarm notification process from a predicted consumption amount of consumables such as reagents and detergents.

In FIG. 5, the consumables management unit 361 acquires the alarm notification timing setting assigned to a user who is currently logged into the automatic analysis device 100 from the alarm setting storage table 364 of the storage unit 162 via the data communication unit 362. When the designated interval or time is detected (31), in a case of interval designation, it is determined whether the historical maximum usage amount or the previous usage amount of specific consumables such as reagents and detergents exceeds the current remaining amount (41), and if determined to be excessive, the alarm management unit 363 is notified (42). The alarm management unit 363 constructs alarm information and notifies the data communication unit 362 of the constructed information. The data communication unit 362 notifies the notification unit 150 of the information.

The current remaining amount is written into the previous remaining amount in the remaining amount storage table 366 of the storage unit 162 via the data communication unit 362 (43). In a case of time designation, time until the next notification timing is calculated (51), it is determined whether the remaining amount of specific consumables such as reagents and detergents is insufficient based on the average hourly usage amount (52), and if determined to be insufficient, the alarm management unit 363 is notified (53). The alarm management unit 363 constructs the alarm information and notifies the data communication unit 362 of the constructed information. The data communication unit 362 notifies the notification unit 150 of the information.

The present invention is not limited to the above-described embodiment, and various modifications are included. For example, the above-described embodiment has been described in detail for the purpose of explaining the present invention to be easily understood, and are not necessarily limited to those including all the described configurations.

It is possible to replace a part of a configuration of one embodiment with a configuration of another embodiment. It is also possible to add a configuration of one embodiment to a configuration of another embodiment. It is also possible to add, delete, and replace a configuration included in another embodiment for a part of a configuration of each embodiment.

### Reference Signs List

100: automatic analysis device
110: analysis unit
111: reagent disk
112: reagent bottle
113: reaction disk
114: probe A
115: probe B
120: specimen input unit
130: sample storage unit
140: transport line
150: notification unit
151: light emitting device
152: sound generating device
153: display device
160: operation unit PC
161: control unit
162: storage unit
163: alarm setting unit
171: radio
172a, 172b: remote operation terminal
200: alarm notification timing setting screen
211: user authority selection
212a, 212b, 212c: interval designation
213a, 213b, 213c, 213d: time designation
361: consumables management unit
362: data communication unit
363: alarm management unit
364: alarm setting storage table
365: consumption amount history table
366: remaining amount storage table

## Claims

1. An automatic analysis system comprising:
an automatic analysis device that analyzes a patient specimen;
a storage unit that stores consumable data of the automatic analysis device;
a control unit that controls alarm control of the automatic analysis device and data input and output processes to and from the storage unit;
a display unit that notifies an alarm upon receiving processing from the control unit; and
an alarm setting unit capable of setting a notification timing of the alarm for each user.

2. The automatic analysis system according to claim 1, wherein the alarm setting unit is capable of setting a notification time for each user having different operation authority levels.

3. The automatic analysis system according to claim 1, wherein when one or a plurality of the alarms are notified at the alarm notification timing, the control unit calculates a total time required to handle a generated alarm and displays the calculated total time on the display unit.

4. The automatic analysis system according to claim 1, wherein when the automatic analysis device is in operation at the alarm notification timing, the control unit calculates a time until the device ends the operation and displays the calculated time on the display unit.

5. The automatic analysis system according to claim 1, wherein
the storage unit stores a remaining amount and a historical consumption amount of consumables used in the automatic analysis device, and
the control unit calculates consumption amount prediction of the consumables until a next alarm notification timing based on the set notification timing of the alarm.

6. The automatic analysis system according to claim 3, wherein when the predicted consumption amount of the consumables is higher than the remaining amount in the device, the control unit notifies the prediction using a light emitting device or a sound generating device.

7. The automatic analysis system according to claim 3, wherein the stored historical consumption amount is a maximum consumption amount.

8. An automatic analysis method of an automatic analysis device that analyzes a patient specimen, wherein
the automatic analysis device
stores data of consumables of the automatic analysis device,
controls alarm control and the storage of the automatic analysis device, and
is capable of notifying an alarm by the control while setting a notification timing of the alarm for each user.

9. The automatic analysis method according to claim 8, wherein the alarm sets a notification time for each user having different operation authority levels.

10. The automatic analysis method according to claim 8, wherein when the automatic analysis device is in operation at the alarm notification timing, a time until the device ends the operation is calculated and output.

11. The automatic analysis method according to claim 8, wherein
a remaining amount and a historical consumption amount of consumables used in the automatic analysis device are stored, and
consumption amount prediction of the consumables until a next alarm notification timing is calculated based on the set notification timing of the alarm.

12. The automatic analysis method according to claim 8, wherein when the predicted consumption amount of the consumables is higher than the remaining amount in the device, notification is made using a light emitting device or a sound generating device.

13. The automatic analysis method according to claim 10, wherein when the automatic analysis device is in operation at the alarm notification timing, a time until the device ends the operation is calculated and output.

14. The automatic analysis method according to claim 10, wherein the stored historical consumption amount is a maximum consumption amount.
